# EUROPEAN PATENT SPECIFICATION

(11) **EP 3 115 138 B1**
(45) Date of publication and mention of the grant of the patent: **27.01.2021**
(21) Application number: 14884506.8
(22) Date of filing: 07.03.2014
(51) Int. Cl.: B23D 33/02, B21C 47/00, B21C 47/26, B23Q 3/08, B32B 3/24, B21C 47/34

(54) **NEGATIVE PRESSURE SHEET STRUCTURE**
UNTERDRUCKFOLIENSTRUKTUR
STRUCTURE DE FEUILLE À PRESSION NÉGATIVE

(43) Date of publication of application: 11.01.2017
(73) Proprietor: JDC, Inc., Sasebo-shi, Nagasaki 857-0852 (JP)
(72) Inventor: HASHIKAWA Yoshito, Sasebo-shi Nagasaki 857-0852 (JP)
(74) Representative: Isarpatent
(86) International application number: PCT/JP2014/055997
(87) International publication number: WO 2015/132961

(56) References cited:
- EP-A1- 2 955 136
- EP-A1- 3 103 556
- EP-A2- 2 172 406
- JP-A- H05 177 426
- JP-A- 2001 137 955
- JP-A- 2003 312 909
- JP-A- 2004 142 936
- JP-A- 2004 142 936
- JP-A- 2005 093 938
- JP-A- 2013 022 669
- US-A1- 2006 022 080

## Description

### Technical Field

The present invention relates to a negative-pressure sheet structure. Specifically, the present invention relates to a negative-pressure sheet structure that makes it difficult to cause harmful damage on strip surfaces, and enables stable strip threading in a metal strip slitter line.

### Background Art

In a so-called metal coil material processing line including a slitter line for a coiled long metal material, as a tension device before winding after slitting, for example, a roll bridle, a belt-type tension device, or the like is disposed.

This tension device imparts a winding tension before a winder to slit strips so that the strips are tightly and securely wound around a winding coil.

In addition, as a tension device, many tension device structures that impart a winding tension by sandwiching and pressing multiple slit strips by two elastic rolls have been adopted (for example, refer to Patent Document 1) . In such a tension device, it has been known that strip meandering is caused by plate thickness deviation, unevenness of cut surfaces, or speed differences among respective strips.

When strip meandering occurs, a side surface of a winding coil becomes irregular, and not only does the appearance deteriorate but also the coil edge is damaged during transportation of the product coil and the commodity value is lost. Therefore, in the structure described in Patent Document 1, for example, as shown in Fig. 16, strip meandering is suppressed by disposing tension pads 102 that sandwich and press a strip from upper and lower sides by felts between elastic rolls 100 before imparting a winding tension and elastic rolls 101 after imparting the winding tension.

In addition, a sheet-like metal coil to be used in a slitter line is generally manufactured by rolling. Therefore, both end portions of the metal coil are thinner than the central portion, so that the thickness differs in one sheet. Further, at the time of slitting, sharp burrs are produced on cut surfaces of end faces of the respective strips, and this may cause thickness differences.

When strips are wound by a winder after slitting, thickness differences on the sheets or thickness differences caused by burrs become differences in winding outer diameter among the respective winding coils. That is, a winding coil diameter of a strip having thickness differences becomes larger than a winding coil diameter of a thin strip, and a circumferential length difference occurs, so that a strip that is wound by a winder with a larger coil diameter is wound faster.

Due to this winding speed difference, the strips differ in length at a position on the downstream of the slitter of the slitter line, and the respective strips form loops different in size from each other. If a strip surface comes into contact with a floor surface, etc. , it is damaged and the commodity value is lost, so that at a position at which a strip loops, a loop pit with a depth of several meters is provided in the floor surface so that the loop is hung down and continuously accumulated.

In addition, at a curved portion at a rise at which a strip turns to the horizontal direction from the vertical direction in the loop pit, to guide the strip, a separator or a guide roll is disposed to provide the strip with rectilinearity. After passing through the curved portion, the strip is fed into a tension device.

However, each of the separator and the guide roll consists of a uniaxial roll, and only constantly rotates with respect to multiple strips, so that the above-described winding speed difference among the strips becomes a problem. That is, since the separator or guide roll rotates in synchronization with a thick and fast strip that makes large the winding coil diameter, a thin strip that makes small the winding coil diameter is also fed into the tension device at the same speed.

As a result, a remainder of the thin strip that makes small the winding coil diameter is left before the tension device, and causes strip meandering.

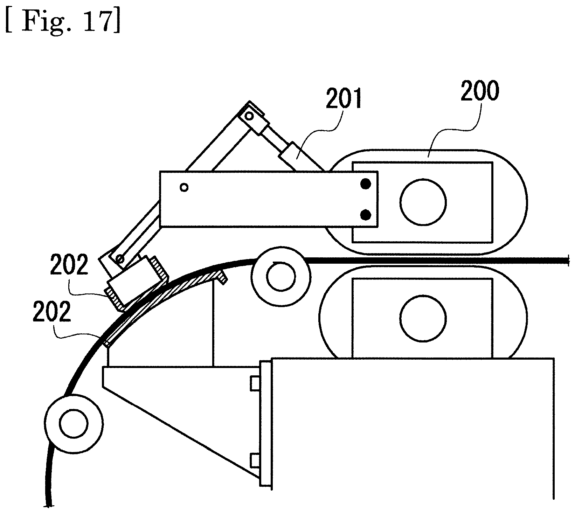

To suppress strip meandering before the tension device, a structure in which a small-sized felt-type plate presser is disposed at the curved portion on the entrance side of the tension device has been used. For example, as shown in Fig. 17, at the curved portion after the loop pit, a pair of upper and lower light-pressure felt pads 202 are provided before a belt-type tension device 200 via a pad opening/closing hydraulic cylinder 201. By sandwiching and pressing a strip from upper and lower sides by the light-pressure felt pads 202, meandering of the strip is suppressed.

In addition, for the purpose of making slitting easy, a loop pit may also be provided before the entrance side of the slitter as well. In this case, to prevent meandering of a looped coil, a structure in which a small-sized felt type plate presser is disposed is adopted (for example, refer to Patent Document 2).

In Patent Document 2, the structure shown in Fig. 18 is described. At tip ends of a plurality of levers 301 connected to a slitter 300, a presser pad 303 around which a felt 302 is wound is provided. Coil meandering and plate irregular motion are prevented by sandwiching and pressing the coil from upper and lower sides by a catenary guide 304 and a presser pad 303.

Further, it is known that at the entrance side of the slitter, if a wide coil is not in a flat state when it is introduced in round blades of the slitter, it harmfully influences strip cutting accuracy. Therefore, a plate pressing structure or a finger that binds the coil from upper and lower sides and guides it to the slitter is used (for example, refer to Patent Document 3) .

In addition, at a sending-out side of the slitter, slit strips must be sent out while it is prevented from irregularly moving up and down due to the round blades of the slitter, so that a plate pressing structure is used (for example, refer to Patent Document 4, Patent Document 5, and Patent Document 6).

As these plate pressing structures and fingers, there are plate-like ones, and by sandwiching a coil and a strip from upper and lower sides at the entrance side and sending-out side of the slitter, the strip is maintained in a flat posture. A slit width of a strip differs depending on the demands of a user, so that various kinds of plate pressers and fingers with various slit widths have been used.

### Prior Art Documents

### Patent Literatures

Patent Document 1: Japanese Published Unexamined Patent Application No. H6-238329
Patent Document 2: Japanese Published Unexamined Patent Application No. H5-318221
Patent Document 3: Japanese Published Unexamined Patent Application No. 2003-191121
Patent Document 4: Japanese Published Unexamined Patent Application No. 2013-169552
Patent Document 5: Japanese Published Unexamined Patent Application No. H11-58124
Patent Document 6: Japanese Published Unexamined Patent Application No. 2000-21008
Patent Document 7: Japanese Published Unexamined Patent Application No. 2010-173842
Patent Document 8: Japanese Published Unexamined Patent Application No. H7-127631

Document EP 3 103 556 A1 , which is an intermediate document, describes a slitter line loop take-up device with a negative pressure roll as an rotating body.

Document EP 2 955 136 A1, which is an intermediate document, describes a suction roll device having a negative pressure roll.

Document EP 2 172 406 A2 forms the basis for the preamble of claim 1, and discloses a negative-pressure sheet structure for applying a gripping force on a strip and adapted to be provided on a metal slitter line.

### SUMMARY OF THE INVENTION

### Problems to be Solved by the Invention

As described above, various structures that prevent meandering and suppress up-down movements of coils and strips are adopted before a tension device and before and after a slitter. However, these structures impart a braking force by sandwiching and pressing coils and strips from upper and lower surfaces by using felts, etc. , in common. Therefore, the surfaces of the coils and strips strongly sandwiched and pressed by felts are scratched or contaminated.

Scratches and contaminations on strip surfaces are fatal defects of strips that are required to have a high-quality surface finish. When a strip has a very thin plate thickness smaller than 0.1 mm like a metal foil, the strip may deform when it is sandwiched and pressed.

In addition, requiring many components for the plate pressing structure to adapt to different slit widths becomes a factor that deteriorates the working efficiency. That is, replacement and maintenance work to adjust the components of the plate pressing structure to the slit width are frequently required, so that handling becomes troublesome, resulting in deterioration in productivity. Further, the components are consumables, so that the costs increase.

The present invention was made in view of the above-described circumstances, and an object thereof is to provide a negative-pressure sheet structure that makes it difficult to cause harmful damage on strip surfaces, and enables stable strip threading in a metal strip slitter line. Means for Solving the Problems

In order to attain the above-described object, a negative-pressure sheet structure of the present invention is provided according to the features of independent claim 1. The negative-pressure sheet structure for applying a gripping force on a strip and adapted to be provided on a metal slitter line is a tabular negative-pressure sheet, said negative-pressure sheet structure comprises a main body comprising a baseplate and a sheet disposed at an outer side of the baseplate; conduction holes which are provided inside the sheet and in which a negative pressure is generated, in use, by a predetermined suction device; conduction grooves formed on a surface of the sheet and connected to the conduction holes; and an outer layer portion provided at an outer side of the sheet and of the conduction grooves and having air permeability of 1.0 cm³/cm²/s or less in terms of Frazier air permeability

Here, by the conduction holes which are provided inside the main body and in which a negative pressure is generated by a predetermined suction device, the pressure inside the main body can be made negative. As the predetermined suction device, for example, a vacuum pump or an ejector, etc., can be used, and by connecting the suction device to the conduction holes, air inside the main body is discharged, and accordingly, a negative pressure can be generated in the negative-pressure sheet structure.

In addition, by the conduction grooves formed on a surface of the main body and connected to the conduction holes, the conduction grooves and the conduction holes are connected to each other, and a negative-pressure region generated in the conduction holes can be spread to the surface of the main body. Further, by the conduction grooves, the negative-pressure region can be expanded. That is, inside the main body, the negative pressure can be made to reach an end portion of the main body away from the conduction holes.

In addition, by the conduction holes in which a negative pressure is generated by the predetermined suction device and conduction grooves formed on a surface of the main body and connected to the conduction holes, a negative pressure is applied to a strip in contact with the surface of the main body, and the strip can be adsorbed. In addition, the main body can be made to grip a strip without damaging a surface of the strip. Adsorption by a negative pressure referred to herein is caused by pressing by an atmospheric pressure that acts on the surface of the strip in contact with the main body.

In addition, by the conduction holes in which a negative pressure is generated by a predetermined suction device, the conduction grooves formed on the surface of the P41360-WOEP English translation of the PCT application main body and connected to the conduction holes, and the outer layer portion with low air permeability provided at the outer side of the conduction grooves, a volume of air to flow to the inside of the main body from the outside of the main body can be reduced while expanding the negative-pressure region inside the main body. That is, the negative pressure inside the main body is increased, and a gripping force to be applied to a strip in contact with the main body can be strengthened.

In addition, by disposing the main body before a tension device of a slitter line, a gripping force generated by a negative pressure can be applied to a strip that is fed into the tension device. That is, the negative-pressure sheet structure comes into contact with only one surface of a strip and imparts a preliminary tension to the strip, so that the strip can be prevented from meandering and provided with rectilinearity.

In an example not forming part of the invention, by disposing the main body at a curved portion at a rise of a loop pit of a slitter line, a gripping force generated by a negative pressure can be applied to a coil and a strip that turn from the vertical direction to the horizontal direction. That is, the negative-pressure sheet structure comes into contact with and grips only one surface of the strip, jumping up of the strip is suppressed, and it P41360-WOEP English translation of the PCT application can be made difficult for the strip to meander.

In addition, by disposing the main body before and after round blades of the slitter of the slitter line, a gripping force generated by a negative pressure can be applied to coils and strips before and after slitting. That is, the negative-pressure sheet structure comes into contact with only one surface of a strip, so that a coil in a flat state can be fed to a blade portion of the slitter. Further, it can be made difficult for slit strips to irregularly move up and down due to the round blades of the slitter.

According to the invention, since the air permeability of the outer layer portion is 1.0 cm³/cm²/s or less in terms of Frazier air permeability, it becomes difficult for the outer layer portion to take in extra outside air. As a result, the negative pressure inside the main body becomes sufficiently high, and a sufficient gripping force can be applied to the strip. For example, even when a width of a strip is narrower than a width of the negative-pressure sheet structure or the respective multiple strips are spaced from each other, a negative pressure can be kept high.

In addition, when a plurality of negative-pressure inlets connected to the conduction holes are formed, and suctioning is controllable for each of the negative-pressure inlets, a negative pressure can be efficiently generated. That is, for example, when a plurality of negative-pressure inlets are connected to a single vacuum pump and the number of strips to be threaded on the surface of the main body is small, by stopping a negative-pressure inlet corresponding to the conduction groove and conduction hole at which no strip is present on the surface of the main body, a negative-pressure suction rate is improved. Further, for example, when each plurality of negative-pressure inlets are connected to a vacuum pump, and the number of strips to be threaded on the surface of the main body is small, by stopping a negative-pressure inlet corresponding to the conduction groove and conduction hole at which no strip is present on the surface of the main body, consumption energy necessary for operation can be reduced.

In addition, in a case where the negative-pressure sheet structure includes an intermediate layer portion that is provided between the conduction grooves and the outer layer portion and has a plurality of vent holes formed therein, a negative pressure is more easily generated inside the main body. That is, for example, even when the conduction grooves are formed to have a large groove width, a negative pressure generated in the conduction grooves can be applied to the outer layer portion through the plurality of vent holes. Further, it becomes difficult for the outer layer portion to fall in the conduction grooves, and surface unevenness is less likely to occur. Accordingly, a negative pressure can be efficiently generated at the outer layer portion. The groove width of the conduction grooves in this case is, for example, a groove width larger than 3 mm.

In addition, in a case where the outer layer portion consists of a nonwoven cloth with low air permeability provided at the outer side of the conduction grooves, and an outer layer member which is laminated on the outer side of the nonwoven cloth and has a larger frictional coefficient than the nonwoven cloth, and in which numerous fine throughholes are formed, a gripping force can be applied to a strip in contact with the outer layer member through the fine throughholes of the outer layer member while a high negative pressure is kept inside the main body by numerous gaps between fibers constituting the nonwoven cloth. Further, frictional properties of the outer layer member improve the gripping force to grip a strip, and for example, when the main body is disposed before a tension device, a sufficient preliminary tension can be imparted.

In addition, in a case where a volume of air flowing in the conduction holes is adjustable, a negative pressure to be generated can be changed according to a thickness of a target P41360-WOEP English translation of the PCT application strip.

In addition, in a case where a plurality of the conduction holes are formed in a threading direction in the main body in which a strip is threaded through the slitter line, and the conduction holes adjacent to each other are at a fixed interval, a plurality of the conduction grooves are formed in a direction in the main body substantially perpendicular to a threading direction in which a strip is threaded through the slitter line, and the conduction grooves adjacent to each other are at a fixed interval, the plurality of conduction grooves are uniformly positioned along the strip threading direction, so that a gripping force can be uniformly imparted regardless of the slit width of the strip.

In an example not forming part of the invention where a curved outer peripheral surface is formed on the main body, a gripping force can be more easily applied to a strip passing through a curved portion at a rise of the loop pit. That is, the outer peripheral surface of the main body is disposed at the curved portion and the outer peripheral surface is easily set along a strip.

In addition, in a case where a plurality of the conduction holes are formed in a direction in the main body substantially perpendicular to a threading direction in which a strip is threaded through the slitter line, and the conduction holes adjacent to each other are at a fixed interval, a plurality of the conduction grooves are formed in a threading direction in the main body in which a strip is threaded through the slitter line, and the conduction grooves adjacent to each other are at a fixed interval, a negative pressure can be continuously applied to a strip in contact with the main body. That is, a gripping force generated by the negative pressure is continuously generated on the surface of the main body.

In a case where the main body is disposed before a winding device, it can be used as a tension device. That is, for example, when a strip formed of a very thin plate with a thickness of 0.1 mm or less like a metal foil is used as a target, by applying a gripping force, a winding tension to tightly and securely wind the strip around a winding coil can be imparted to the strip.

In addition, in a case where the outer layer portion is formed of a nonwoven cloth with low air permeability, a structure that easily increases the negative pressure inside the main body can be obtained. That is, for example, the negative pressure can be increased by using a nonwoven cloth with very low air permeability or by using a multilayer structure formed by laminating a plurality of nonwoven cloths. Further, when the nonwoven cloth surface is contaminated or clogged, the outer layer portion can be easily replaced, so that maintenance of the device can be made easy.

### Effect of the Invention

A negative-pressure sheet structure according to the present invention makes it difficult to cause harmful damage on strip surfaces, and enables stable strip threading in a metal strip slitter line.

### BRIEF DESCRIPTION OF THE DRAWINGS

Fig. 1 is a schematic plan view showing a positional relationship between a negative-pressure sheet structure and strips.
Figs. 2 are a sectional view taken in the A-A direction in Fig. 1 in a first embodiment (Fig. 2(a)), and a sectional view taken in the arrow B direction in Fig. 2(a) (Fig. 2(b)).
Fig. 3 is a view showing a magnified microscopic photograph of a nonwoven cloth used as a nonwoven cloth lamination outer layer 6 of a tabular negative-pressure sheet 3.
Fig. 4 is a view showing a magnified microscopic photograph of a general nonwoven cloth.
Fig. 5 is a view showing a magnified microscopic photograph of a high-density woven cloth.
Fig. 6 is a view showing a magnified microscopic photograph of a general woven cloth.
Figs . 7 are a sectional view taken in the arrow C direction in Fig. 2(a) (Fig. 7(a)), and a schematic sectional view of a structure including a plurality of negative-pressure common paths (Fig. 7(b)).
Fig. 8 is a sectional view taken in the arrow D direction in Fig. 1 in a second embodiment.
Fig. 9 is a sectional view taken in the arrow B direction in Fig. 8.
Fig. 10 is a sectional view taken in the arrow C direction in Fig. 8.
Fig. 11 is a schematic sectional view of a negative-pressure sheet structure provided with a plurality of negative-pressure common paths.
Fig. 12 is a schematic view relating to negative-pressure adjustment of a tabular negative-pressure sheet 19.
Figs. 13 are a schematic sectional view of a negative-pressure sheet provided with a porous plate as an intermediate layer portion (Fig. 13(a)), a sectional view taken in the arrow B direction in Fig. 9(a) (Fig. 13(b)), and a sectional view taken in the arrow C direction in Fig. 9(a) (Fig. 13(c)).
Fig. 14 is a schematic view showing a state where a P41360-WOEP English translation of the PCT application negative-pressure sheet structure is disposed before and after a slitter.
Fig. 15 is a schematic view showing a structure and a disposed position of a curved negative-pressure sheet not forming part of the invention.

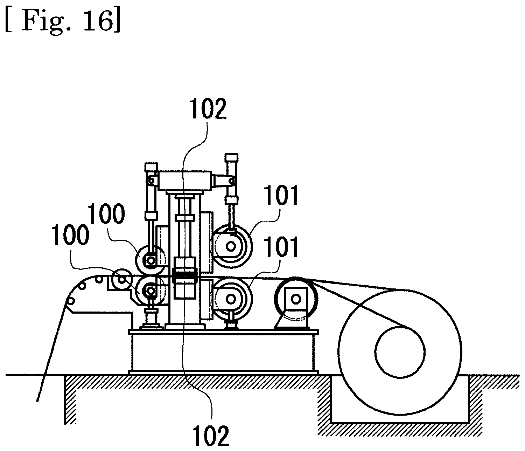

Fig. 16 is a schematic view showing a conventional felt pressing structure of an elastic roll-type tension device.
Fig. 17 is a schematic view showing a conventional felt pressing structure before a belt-type tension device.

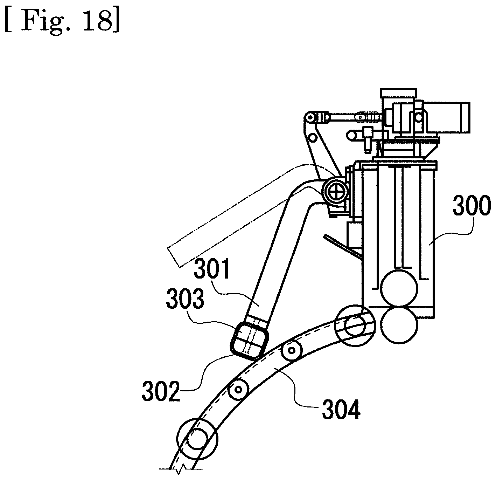

Fig. 18 is a schematic view showing a conventional felt pressing structure before a slitter.

### Best Mode for Carrying Out the Invention

Hereinafter, embodiments of the present invention are described with reference to the drawings for understanding of the present invention.

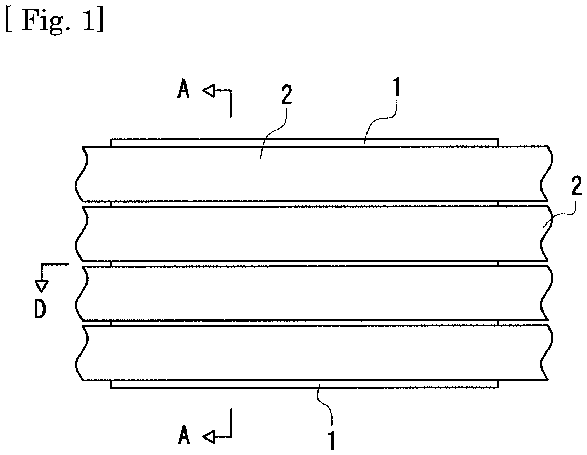

Fig. 1 is a schematic plan view showing a positional relationship between a negative-pressure sheet structure and strips.

Here, as shown in Fig. 1, a negative-pressure sheet structure 1 to which the present invention is applied is disposed at the lower side of strips 2 to be threaded through a slitter line or at the lower side of a coil not shown before slitting. For the negative-pressure sheet structure 1, according to a structure and a disposed position of a negative-pressure path formed inside the negative-pressure sheet structure 1, the following embodiments can be adopted. Embodiments of the present invention are not limited to the following content, and the following content is shown by way of example. The drawings shown in Fig. 1, Figs. 2, and Figs. 7 to Fig. 15 show schematic structures for description, and are not intended to limit the size and scale of the structure in the present invention.

### <First Embodiment>

A tabular negative-pressure sheet 3 as a first embodiment of a negative-pressure sheet structure is described.

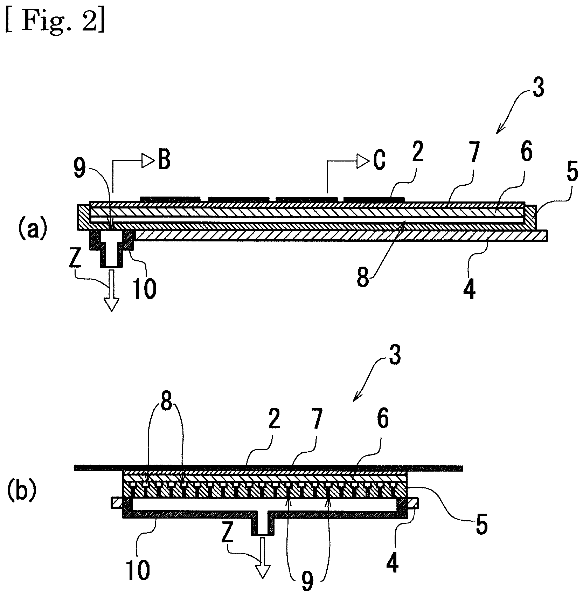

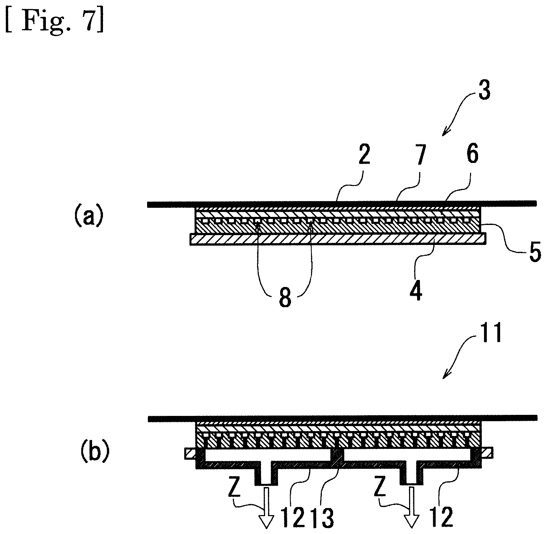

Figs. 2 are a sectional view taken in the A-A direction in Fig. 1 in the first embodiment (Fig. 2 (a)), and a sectional view taken in the arrow B direction in Fig. 2(a) (Fig. 2(b)) . Figs. 7 are a sectional view taken in the arrow C direction in Fig. 2(a) (Fig. 7(a)), and a schematic sectional view of the negative-pressure sheet structure provided with a plurality of negative-pressure common paths (Fig. 7(b)).

As shown in Fig. 2(a), the tabular negative-pressure sheet 3 includes a baseplate 4, a sheet 5 with conduction grooves, a nonwoven cloth lamination outer layer 6, and a surface layer member 7.

The baseplate 4 is a member as a base of the tabular negative-pressure sheet 3, and is made of a metal. The sheet 5 with conduction grooves is a member disposed at the outer side of the baseplate 4, and has negative-pressure conduction grooves 8 formed on the surface. In the tabular negative-pressure sheet 3, the negative-pressure conduction grooves 8 are formed in a direction substantially perpendicular to a direction in which strips 2 are threaded, and a negative pressure is generated as far as an end portion of the tabular negative-pressure sheet 3. The baseplate 4 and the sheet 5 with conduction grooves correspond to the main body.

In addition, the nonwoven cloth lamination outer layer 6 is made of a nonwoven cloth, and is formed at the outer side of the sheet 5 with conduction grooves. Due to low air permeability of the nonwoven cloth lamination outer layer 6, an outside air inflow is miniscule in amount, and a negative pressure inside the tabular negative-pressure sheet 3 can be increased. Here, the nonwoven cloth lamination outer layer 6 has air permeability of 1. 0 cm³/cm²/s or less in terms of Frazier air permeability.

In addition, at the outer side of the nonwoven cloth lamination outer layer, a surface layer member 7 made of artificial leather with a larger frictional coefficient than the nonwoven cloth is disposed. The surface layer member 7 is a portion that comes into contact with surfaces of strips 2, and numerous throughholes are formed in the surface layer member 7. Through these throughholes, a negative pressure is generated as far as the surface. Further, the throughholes of the surface layer member 7 have a hole diameter of approximately 0.2 mm, and are formed at intervals of approximately 1 mm.

The baseplate 4, the sheet 5 with conduction grooves, the nonwoven cloth lamination outer layer 6, and the surface layer member 7 are respectively fixed, and are structured so as not to separate even when pulled by movements of the strips 2 being threaded through the line. Further, the nonwoven cloth lamination outer layer 6 and the surface layer member 7 can be easily replaced according to degradation and contamination.

Here, the material forming the baseplate 4 is not particularly limited, and can be properly changed according to the purpose of use. For example, in a case where the negative-pressure sheet structure is disposed at a curved portion at a rise of a loop pit described later, it is also possible that a thin plate of aluminum or soft brass is used to make the baseplate bendable along the curved portion.

In addition, the baseplate 4 and the sheet 5 with conduction grooves do not necessarily have to be used, and it is only required that a structure that generates a negative P41360-WOEP English translation of the PCT application pressure inside the tabular negative-pressure sheet is provided. For example, a structure in which a baseplate 4 having grooves similar to the negative-pressure conduction grooves 8 and a sheet 5 with conduction grooves are integrated in the baseplate 4 by plastic molding can also be adopted.

In addition, the negative-pressure conduction grooves 8 do not necessarily have to be formed in a direction substantially perpendicular to a threading direction of the strips 2, and it is only required that a structure that generates a negative pressure as far as an end portion of the tabular negative-pressure sheet 3 is provided. However, the negative-pressure conduction grooves 8 are preferably formed in a direction substantially perpendicular to a threading direction of the strips 2 from the point that it becomes possible to uniformly apply a negative pressure to the strips regardless of the plate widths of the strips.

The nonwoven cloth lamination outer layer 6] has air permeability of 1.0 cm³/cm²/s in terms of Frazier air permeability from the point that a sufficient gripping force can be applied to strips to be threaded.

In addition, the surface layer member 7 made of artificial leather with a larger frictional coefficient than the nonwoven cloth does not necessarily have to be disposed at the outer side of the nonwoven cloth lamination outer layer 6. For example, a structure in which the nonwoven cloth lamination outer layer 6 comes into contact with surfaces of strips can also be adopted. However, the surface layer member 7 made of artificial leather with a larger frictional coefficient than the nonwoven cloth is preferably disposed at the outer side of the nonwoven cloth lamination outer layer 6 from the point that frictional resistance with a strip surface increases, the gripping force to be applied to the strips can be increased, and a structure suitable for imparting a preliminary tension before a tension device is obtained.

In addition, the material forming the surface layer member 7 is not limited to artificial leather, and is only required to have a larger frictional coefficient than the nonwoven cloth lamination outer layer 6. For example, it is also possible that the surface layer member 7 is made of a rubber material.

In addition, the hole diameter and intervals of the throughholes of the surface layer member 7 are not particularly limited, and it is only required that a negative pressure is applied to strips.

In addition, the baseplate 4, the sheet 5 with conduction grooves, the nonwoven cloth lamination outer layer 6, and the surface layer member 7 do not necessarily have to be respectively fixed, and are only required not to separate from each other when pulled by movements of strips 2 threaded through the line. For example, a structure in which all of these components are integrally fixed by using an adhesive sheet, etc., with air permeability can also be adopted.

As shown in Fig. 2 (a), at one end side of the sheet 5 with conduction grooves, negative-pressure conduction holes 9 penetrating through the sheet 5 with conduction grooves are formed. The negative-pressure conduction holes 9 serve as air flow passages when air inside the tabular negative-pressure sheet 3 is removed by a vacuum pump.

In addition, between the negative-pressure conduction holes 9 and the vacuum pump, a negative-pressure common path 10 is provided, and serves as a suction port for generating a negative pressure inside the tabular negative-pressure sheet 3. The arrow Z shows a direction in which the tabular negative-pressure sheet 3 is suctioned by a vacuum pump.

In addition, a negative-pressure regulating valve and a negative-pressure gauge not shown are provided by being connected to the negative-pressure common path 10. The negative-pressure regulating valve is a valve that adjusts a volume of air flowing in the negative-pressure common path 10.

Here, in the present invention, there is no need to use a large-capacity exhaust blower as a suction device. To maintain a back surface of a strip in contact with the negative-pressure sheet structure in a negative-pressure state, and generate a gripping force by pressing with the atmospheric air, a vacuum pump, an ejector, or the like which generates a high degree of vacuum in spite of its comparatively small suction amount can be used.

As a technology related to negative-pressure adsorption using an exhaust blower, there is a suction roll method (refer to, for example, Patent Document 7), however, its air permeability is much higher than that in the present invention. Therefore, suctioning with a large-capacity exhaust blower is needed, and in the suction roll described in Patent Document 7, the suction path structure is much larger than that of the tabular negative-pressure sheet 3.

Alternatively, when suctioning efficiency is insufficient as a suction roll-type device, a device provided with a mechanism that adjusts a suction region inside a roll is also available (for example, refer to Patent Document 8) .

As compared with the above-described two devices, in the tabular negative-pressure sheet 3, by applying a nonwoven cloth with low air permeability, a large suction structure or a structure to adjust a suction region becomes unnecessary, so that the tabular negative-pressure sheet can be formed as a thin sheet-like structure.

In addition, the negative-pressure common path 10 does not necessarily have to be provided, and it is only required that a structure that can make the pressure inside the tabular negative-pressure sheet 3 negative is provided.

In addition, the negative-pressure regulating valve and the negative-pressure gauge do not necessarily have to be provided. However, the negative-pressure regulating valve and the negative-pressure gauge are preferably provided from the point that a negative pressure to be generated inside the sheet becomes adjustable and the negative-pressure suctioning efficiency can be improved.

As shown in Fig. 2(b), one negative-pressure conduction hole 9 is provided for one negative-pressure conduction groove 8. In the tabular negative-pressure sheet 3, a plurality of negative-pressure conduction grooves 8 are formed at fixed intervals along a direction in which strips 2 are threaded, and at the lower side of these grooves, a plurality of negative-pressure conduction holes 9 are similarly formed at fixed intervals. The arrow Z shows a direction in which the tabular negative-pressure sheet 3 is suctioned by a vacuum pump.

Here, the negative-pressure conduction grooves 8 and the negative-pressure conduction holes 9 do not necessarily have to be plurally formed at fixed intervals along a direction in which the strips 2 are threaded, and it is only required that a structure that imparts a gripping force to the strips 2 by a negative pressure is provided. However, pluralities of negative-pressure conduction grooves 8 and negative-pressure conduction holes 9 are preferably formed at fixed intervals along a direction in which the strips 2 are threaded from the point that a negative pressure can be uniformly applied to the strips regardless of the slit widths.

A nonwoven cloth used for the nonwoven cloth lamination outer layer 6 of the tabular negative-pressure sheet 3 is described.

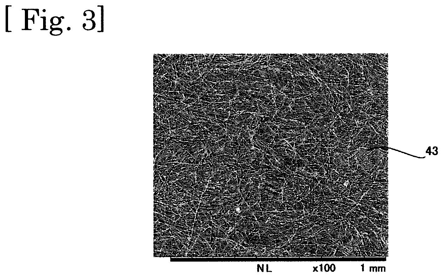

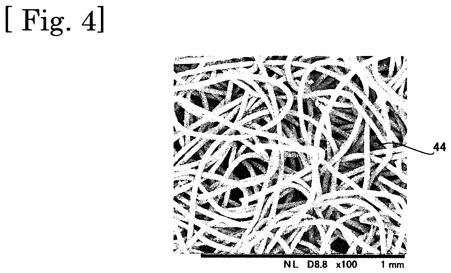

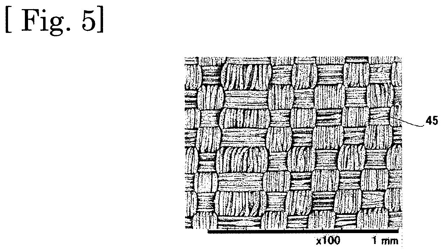

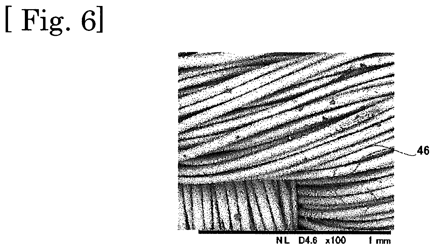

Fig. 3 is a view showing a magnified microscopic photograph of a nonwoven cloth used for the nonwoven cloth lamination outer layer 6 of the tabular negative-pressure sheet 3. Fig. 4 is a view showing a magnified microscopic photograph of a general nonwoven cloth. Fig. 5 is a view showing a magnified microscopic photograph of a high-density woven cloth. Fig. 6 is a view showing a magnified microscopic photograph of a general woven cloth.

Fig. 3 shows a microscopic photograph (100 magnifications) of a nonwoven cloth 43 used for the nonwoven cloth lamination outer layer 6 of the tabular negative-pressure sheet 3. The nonwoven cloth 43 is formed by entwining fibers with a diameter of approximately 4 µm at high density. A single nonwoven cloth 43 can realize low air permeability of approximately 0.8 cm³/cm²/s in terms of Frazier air permeability. Further, it is characterized that among respective extra fine fibers of this nonwoven cloth 43, numerous micrometer-sized gaps exist, and through the gaps, a negative pressure can easily reach the entire surface of the nonwoven cloth lamination outer layer 6.

On the other hand, Fig. 4 shows a microscopic photograph of a nonwoven cloth 44 generally used for tension pads that are one of the tension devices. The nonwoven cloth 44 is formed by entwining fibers with a fiber diameter of approximately 20 to 30 µm, and is lower in density than the nonwoven cloth 43. Further, a single nonwoven cloth 44 has Frazier air permeability of 50 to 100 cm³/cm²/s, and is difficult to use as a nonwoven cloth of the nonwoven cloth lamination outer layer 6.

Here, by combining the nonwoven cloth 44 with a high-density woven cloth 45 made of a material with low air permeability of approximately 0.8 cm³/cm²/s in terms of Frazier air permeability, for example, nylon woven cloth or the like, low air permeability can also be realized. That is, it is also possible that by sandwiching the high-density woven cloth 45 between nonwoven cloths 44, the nonwoven cloth lamination outer layer 6 is formed. Magnified microscopic photographs (100 magnifications) of the high-density woven cloth 45 and a general woven cloth 46 are respectively shown in Fig. 5 and Fig. 6.

In addition, the nonwoven cloth lamination outer layer 6 does not necessarily have to be formed of one nonwoven cloth 43. For example, a structure that lowers air permeability by laminating a plurality of nonwoven cloths can also be adopted.

In addition, a section in a region of the tabular negative-pressure sheet 3 in which the negative-pressure conduction holes 9 and the negative-pressure common path 10 are absent has the structure shown in Fig. 7(a).

Further, the tabular negative-pressure sheet 3 described above is structured so that a single negative-pressure common path 10 is provided for the plurality of negative-pressure conduction holes 9, however, in the present invention, a negative-pressure common path structure shown in Fig. 7(b) can also be adopted.

In a tabular negative-pressure sheet 11 shown in Fig. 7(b), two negative-pressure common paths 12 are provided, and between these, a partition 13 is formed. In each negative-pressure common path 12, a negative-pressure regulating valve is provided to form a structure that can adjust a negative pressure. The arrow Z shows a direction in which the tabular negative-pressure sheet 11 is suctioned by a vacuum pump.

Thus, by providing a plurality of negative-pressure common paths 12 so that a negative pressure is adjustable for each region, a gripping force to be applied to the strip 2 can be changed according to the thickness of the strip 2 to be threaded.

### <Second Embodiment>

A tabular negative-pressure sheet 14 that is a second embodiment of the negative-pressure sheet structure is described.

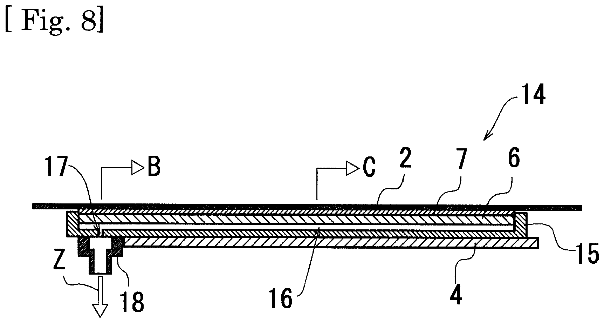

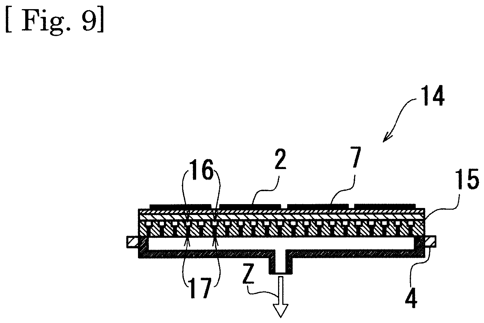

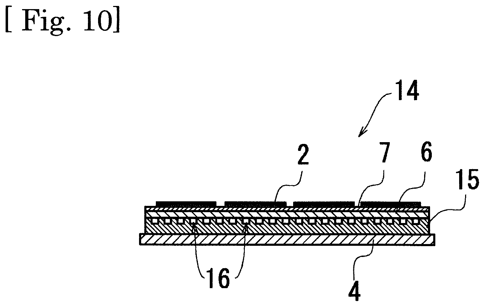

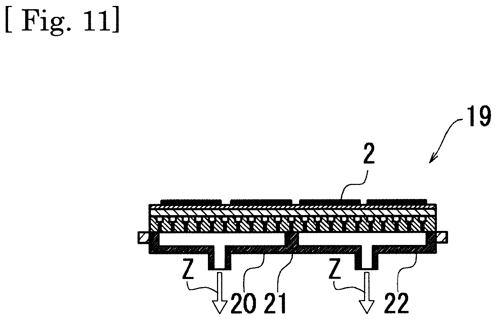

Fig. 8 is a sectional view taken in the arrow D direction in Fig. 1 in the second embodiment. Fig. 9 is a sectional view taken in the arrow B direction in Fig. 8. Fig. 10 is a sectional view taken in the arrow C direction in Fig. 8. Fig. 11 is a schematic sectional view of a negative-pressure sheet structure provided with a plurality of negative-pressure common paths.

As shown in Fig. 8, the tabular negative-pressure sheet 14 includes a baseplate 4, a sheet 15 with conduction grooves, a nonwoven cloth lamination outer layer 6, and a surface layer member 7.

In the tabular negative-pressure sheet 14, negative-pressure conduction grooves 16 are formed on the surface of the sheet 15 with conduction grooves. In the tabular negative-pressure sheet 14, negative-pressure conduction grooves 16 are formed in a direction substantially parallel to a direction in which strips 2 are threaded so that a negative pressure is generated as far as an end portion of the tabular negative-pressure sheet 14.

In addition, at one end side of the sheet 15 with conduction grooves, negative-pressure conduction holes 17 penetrating through the sheet 15 with conduction grooves are formed. Further, between the negative-pressure conduction holes 17 and a vacuum pump, a negative-pressure common path 18 is provided. The arrow Z shows a direction in which the tabular negative-pressure sheet 14 is suctioned by the vacuum pump.

As shown in Fig. 9, one negative-pressure conduction hole 17 is provided for one negative-pressure conduction groove 16. In the tabular negative-pressure sheet 14, along a direction substantially perpendicular to a direction in which the strips 2 are threaded, a plurality of negative-pressure conduction grooves 16 are formed at fixed intervals, and at the lower side of these grooves, negative-pressure conduction holes 17 are similarly formed at fixed intervals. The tabular negative-pressure sheet 14 and the tabular negative-pressure sheet 3 described above are different in negative-pressure conduction groove forming directions from each other. The arrow Z shows a direction in which the tabular negative-pressure sheet 14 is suctioned by a vacuum pump.

In addition, a section in a region of the tabular negative-pressure sheet 14 in which the negative-pressure conduction holes 17 and the negative-pressure common path 18 are absent has the structure shown in Fig. 10.

Further, for the tabular negative-pressure sheet 14, a structure provided with a plurality of negative-pressure common paths can also be adopted. In a tabular negative-pressure sheet 19 shown in Fig. 11, two negative-pressure common paths 20 are provided, and between these, a partition 21 is formed. The arrow Z shows a direction in which the tabular negative-pressure sheet 19 is suctioned by a vacuum pump.

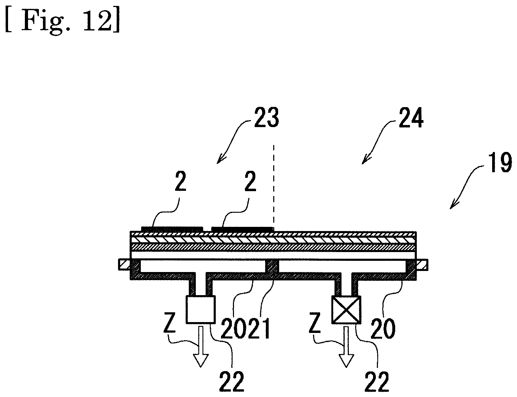

Thus, by providing a plurality of negative-pressure common paths 20 so that a negative pressure is adjustable for each region, a gripping force to be applied to the strip 2 can be changed according to the thickness of the strip 2 to be threaded. With this structure, in a case where no strips 2 are disposed on the surface of the surface layer member 7, a negative pressure can be efficiently generated. This is described hereinafter with reference to Fig. 12.

As shown in Fig. 12, in each of the two negative-pressure common paths 20 of the tabular negative-pressure sheet 19, a negative-pressure regulating valve 22 is provided, so that a negative pressure is adjustable . When multiple strips 2 are threaded, strips 2 are present on the surface layer member 7 in a region 23, and no strips 2 are threaded in a region 24. The arrow Z shows a direction in which the tabular negative-pressure sheet 19 is suctioned by a vacuum pump.

In this case, for example, when two negative-pressure common paths 20 are connected to a single vacuum pump, by closing the negative-pressure regulating valve 22 on the region 24 side, a negative pressure can be efficiently generated on the region 23 side. When the two negative-pressure common paths 20 are connected to separate vacuum pumps, by stopping operation of a vacuum pump connected to the negative-pressure common path 20 on the region 24 side, consumption energy necessary for operation of this structure can be reduced.

Thus, like the tabular negative-pressure sheet 14 and the tabular negative-pressure sheet 19, in a structure in which the negative-pressure conduction grooves 16 are formed in a direction substantially parallel to a direction in which strips 2 are threaded, by forming a plurality of negative-pressure common paths, negative-pressure suctioning efficiency can be improved.

### <Third Embodiment>

A tabular negative-pressure sheet 25 that is a third embodiment of the negative-pressure sheet structure is described.

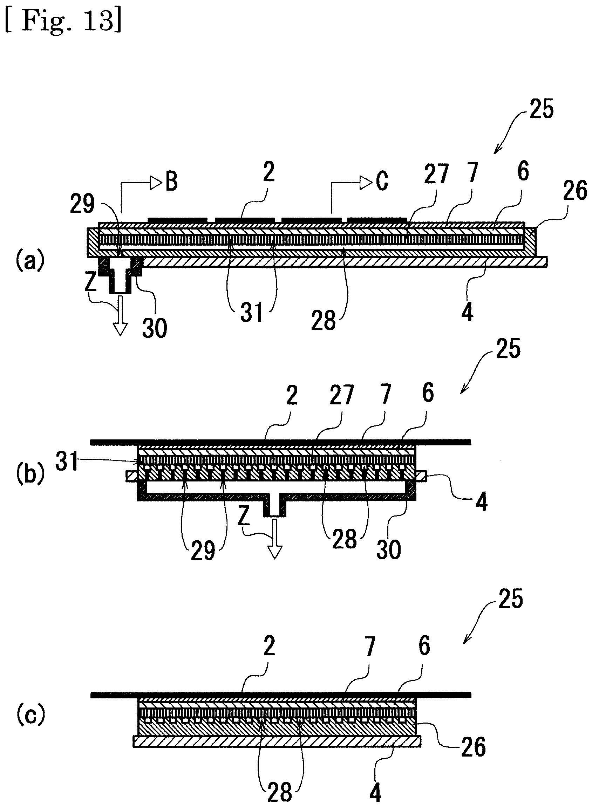

Figs. 13 are a schematic sectional view of a negative-pressure sheet provided with a porous plate as an intermediate layer portion (Fig. 13(a)), a sectional view taken in the arrow B direction in Fig. 13(a) (Fig. 13(b)), and a sectional view taken in the arrow C direction in Fig. 13(a) (Fig. 13(c)).

As shown in Fig. 13(a), the tabular negative-pressure sheet 25 includes a baseplate 4, a sheet 26 with conduction grooves, an intermediate layer 27, a nonwoven cloth lamination outer layer 6, and a surface layer member 7.

In the tabular negative-pressure sheet 25, negative-pressure conduction grooves 28 with a groove width of more than 3 mm are formed on the surface of the sheet 26 with conduction grooves. Further, in the tabular negative-pressure sheet 25, negative-pressure conduction grooves 28 are formed in a direction substantially perpendicular to a direction in which strips 2 are threaded so that a negative pressure is generated as far as an end portion of the tabular negative-pressure sheet 26.

In addition, on one end side of the sheet 26 with conduction grooves, negative-pressure conduction holes 29 penetrating through the sheet 26 with conduction grooves are formed. Further, between the negative-pressure conduction holes 29 and a vacuum pump, a negative-pressure common path 30 is provided. The arrow Z shows a direction in which the tabular negative-pressure sheet 25 is suctioned by the vacuum pump.

In addition, the intermediate layer 27 is formed of a punching metal in which numerous vent holes 31 are formed, and through the vent holes 31, a negative pressure generated in the negative-pressure conduction holes 29 and the negative-pressure conduction grooves 28 reaches the nonwoven cloth lamination layer 6. Fig. 13(b) shows a region in which the negative-pressure conduction holes 29 and the negative-pressure common path 30 are present, and Fig. 13(c) shows a region in which the negative-pressure conduction holes 29 and the negative-pressure common path 30 are absent. In Fig. 13(b), the arrow Z shows a direction in which the tabular negative-pressure sheet 25 is suctioned by the vacuum pump.

Thus, in the third embodiment, even in a structure in which the negative-pressure conduction grooves 28 are formed to have large widths, a negative pressure can be sufficiently generated inside the tabular negative-pressure sheet 25. In addition, the intermediate layer 27 makes it difficult for the nonwoven cloth lamination outer layer 6 to fall in the negative-pressure conduction grooves 28, so that a structure that makes it difficult for unevenness to occur on the surface of the nonwoven cloth lamination outer layer 6 is obtained.

The first embodiment, the second embodiment, and the third embodiment of the present invention described above are negative-pressure sheet structures formed to be tabular which can be disposed in a region of a slitter line in which strips are threaded in the horizontal direction.

First, the tabular negative-pressure sheet structure can be disposed before a tension device of a slitter line. By applying a gripping force generated by a negative pressure to one-side surfaces of the strips, a preliminary tension for preventing the strips from meandering can be applied.

In addition, since the negative-pressure sheet structure is structured so that air permeability inside the negative-pressure sheet structure is kept low, even if air is suctioned through gaps between multiple strips after slitting, the negative pressure can be maintained and the gripping force can be kept. This advantage can be obtained even when the slit widths of the strips are different, so that the structure can adapt to strips with various slit widths.

In addition, a pressure to be applied to strip surfaces is softer than in a meandering preventive structure of tension pads that sandwich and press strips from upper and lower sides by felts, and it is difficult to make scratches and contamination on the strip surfaces, and further, a sufficient preliminary tension can be imparted to the strips by the negative pressure. In addition, no damage is caused by this structure on a surface of a strip on the side that does not come into contact with the negative-pressure sheet structure, so that a strip having no damage on one surface can be obtained. As a result, a product coil having a neat winding form can be produced.

In addition, by forming the negative-pressure sheet structure long, the contact area with strips increases, and this makes it more difficult to make scratches on the surfaces. Further, one-side surface of the surfaces of a strip does not come into contact with other structural bodies, so that a preliminary tension can be imparted thereto without making scratches and contamination.

Further, the tabular negative-pressure sheet structure can be used as a tension device to impart a winding tension by being disposed before a winding coil of a slitter line. In this case, for example, a metal strip formed of a very thin plate with a thickness of less than 0.1 mm like a metal foil may be used as a target to which a tension is imparted. The negative-pressure sheet structure can impart a winding tension to strips by a gripping force generated by a negative pressure and a frictional force of the surface layer member.

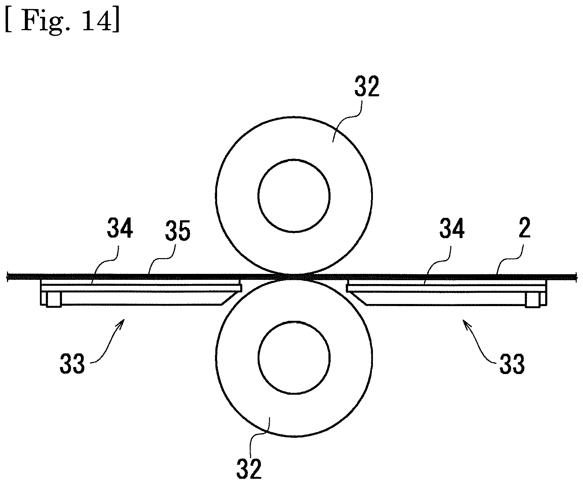

Further, the tabular negative-pressure sheet structure can be disposed on both of the entrance side and sending-out side of a slitter of a slitter line. That is, as shown in Fig. 14, by disposing the negative-pressure sheet structure 33 extending to the vicinity of round blades 32 of the slitter along a threading line of a coil 35 and a strip 2 before slitting, a gripping force generated by a negative pressure can be applied to the coil 35 and the strip 2, and accordingly, stable threading is enabled.

In the negative-pressure sheet structure 33, unlike the above-described tabular negative-pressure sheet 3, a portion that comes into contact with a strip 2 is a surface layer member 34 made of fluorine resin. Further, in the surface layer member 34, numerous fine throughholes are formed.

In this surface layer member 34, through the fine throughholes, a negative pressure inside the negative-pressure sheet structure 33 reaches the surface of the surface layer member 34.

In addition, the fluorine resin forming the surface layer member 34 is a material with a small frictional coefficient, and frictional resistance applied from the negative-pressure sheet structure 33 to the surface of the strip 2 is smaller than frictional resistance applied from the tabular negative-pressure sheet 3 using artificial leather for the surface layer member 7 to the surface of the strip 2.

As for a gripping force necessary for pressing the coil 35 and the strip 2 before and after the slitter, a force smaller than a gripping force when imparting a preliminary tension to the strip 2 before a tension device can be sufficient. Further, an excessively strong gripping force disturbs smooth threading of the coil 35 and the strip 2.

Therefore, by reducing frictional resistance of the surface layer member 34 to the coil 35 and the strip 2, the gripping force is reduced, and a gripping force proper for plate pressing of the slitter is realized. The gripping force can also be adjusted by using the negative-pressure regulating valve described above.

Here, the surface layer member 34 does not necessarily have to be provided in the negative-pressure sheet structure 33, and depending on a material and plate thickness of a target strip, a nonwoven cloth lamination outer layer formed of a nonwoven cloth may be used as a member that comes into contact with a coil and a strip. However, as described above, the surface layer member 34 is preferably provided in the negative-pressure sheet structure 33 from the point that the frictional resistance can be further reduced and both of smooth threading and plate pressing of a strip can be realized as described above.

Thus, at the entrance side of the slitter, the negative-pressure sheet structure 33 grips the coil 35 with a wide width before slitting by a negative pressure and suppresses up-down movements of the coil 35, so that the coil 35 can be supplied in a flat state to the round blades 32 of the slitter. Further, at the sending-out side of the slitter, the negative-pressure sheet structure grips the strip 2 by a negative pressure and can suppress irregular up-down movements of the strip 2 caused by the round blades 32 of the slitter.

The negative-pressure sheet structure 33 is structured so as to impart a gripping force to a strip regardless of a slit width of the strip, so that there is no need to prepare a member suited to the slit width of the strip. That is, component replacement for each slit width of strips is unnecessary, so that the structure is very conveniently used.

In the negative-pressure sheet structure 33 to be disposed on both of the entrance side and the sending-out side of the slitter, like the tabular negative-pressure sheet 14 and the tabular negative-pressure sheet 19 described above, a structure in which negative-pressure conduction grooves are formed in a direction substantially parallel to a direction in which the coil 35 and the strip 2 are threaded is preferably adopted although this is not essential.

To press a plate at an entrance side and a sending-out side of a slitter, by pressing the plate at a position as proximal to the round blades 32 of the slitter as possible, up-down movements of the coil 35 and the strip 2 can be reduced. Here, in a case where a structure is adopted in which negative-pressure conduction grooves are formed in a direction substantially parallel to a direction in which the coil 35 and the strip 2 are threaded, by reducing the depth of the groove proximal to the round blades 32 of the slitter among the negative-pressure conduction grooves, a negative pressure can be generated as far as this region while the negative-pressure sheet structure 33 is partially thinned. That is, a structure that presses a plate as far as a position proximal to the round blades 32 of the slitter is easily realized. The term "pressing" used herein means a phenomenon in which the atmospheric pressure acts from the surface side due to a negative pressure on the strip back surface.

### <Example of a fourth negative-pressure sheet structure not forming part of the invention>

A negative-pressure sheet structure can also be adopted for a structure to be disposed at a curved portion at a rise of a loop pit, the following fourth example is possible.

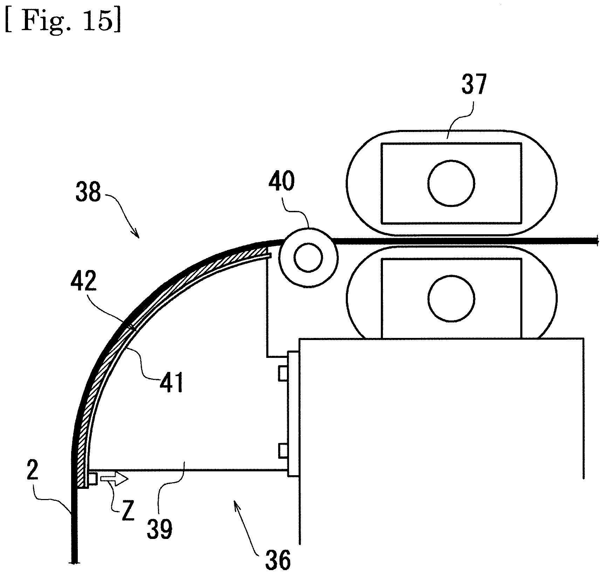

As a fourth example for comparison, a curved negative-pressure sheet 36 shown in Fig. 15 is described.

Fig. 15 is a schematic view showing a structure and disposed position of a curved negative-pressure sheet structure.

The curved negative-pressure sheet 36 is structured similar to the tabular negative-pressure sheet 3 described above except for the following different points.

The curved negative-pressure sheet 36 is disposed at a curved portion 38 at a rise of a loop pit before a belt-type tension device 37 of a slitter line. Further, the curved negative-pressure sheet 36 includes a baseplate 39 having a curved surface. The baseplate 39 can be disposed adjacent to a separator 40 disposed at the curved portion 38.

At the outer side of the baseplate 39, a sheet 41 with conduction grooves made of bendable soft plastic is disposed. In addition, on the surface of the sheet 41 with conduction grooves, negative-pressure conduction grooves 42 are formed. The structure other than these is in common with the structure of the tabular negative-pressure sheet 3, and by contacting with a surface of a strip 2 passing through the curved portion 38, a gripping force is generated. Fig. 15 is a schematic view of the curved negative-pressure sheet 36, and members common to the tabular negative-pressure sheet 3 are not shown. Further, the arrow Z shows a direction in which the curved negative-pressure sheet 36 is suctioned by a vacuum pump.

Thus, the curved negative-pressure sheet 36 is a structure positioned along the curved portion 38 at the rise of the loop pit, and applies a gripping force generated by a negative pressure to the strip 2, suppresses jumping up and meandering of the strip at the curved portion, and provides the strip 2 with rectilinearity.

In addition, the long portion of the curved portion 38 guides threading of the strip 2, so that threading of the strip 2 can be sufficiently stabilized. As a result, the threading speed of the strip 2 on the line can be made high, and accordingly, the productivity can be improved.

In addition, in the curved negative-pressure sheet 36, like the tabular negative-pressure sheet 14 and the tabular negative-pressure sheet 19 described above, a structure is preferably adopted in which negative-pressure conduction grooves are formed in a direction substantially parallel to a direction in which the strip 2 is threaded although this is not essential.

In the structure in which negative-pressure conduction grooves are formed in a direction substantially parallel to a direction in which the strip 2 is threaded, a plurality of negative-pressure conduction holes leading to the negative-pressure conduction grooves are formed in a direction substantially perpendicular to the direction in which the strip 2 is threaded. That is, as compared with a case where negative-pressure conduction holes are formed along a curved surface, they can be formed more easily, and this brings about an advantage in manufacturing.

Further, as described above, this structure can also be disposed at the curved portion of the loop pit provided before the slitter as well as at the loop pit before the tension device. In this case, by applying a gripping force to a coil before slitting, meandering of the coil can be suppressed.

Here, the baseplate 39 does not necessarily have to have the curved surface, and is only required to be capable of being disposed along the curved portion at the rise of the loop pit. For example, a structure enabling fitting to the curve of the curved portion by adopting a bendable plate made of aluminum or a thin plate made of soft brass with a thickness of 3 mm to 5 mm is also possible.

In addition, the material of the sheet 41 with conduction grooves is not limited, and the sheet is only required to be capable of being disposed along the curved portion at the rise of the loop pit. For example, the sheet can be made of synthetic rubber.

As described above, the negative-pressure sheet structure according to the present invention makes it difficult to cause harmful damage on strip surfaces, and enables stable strip threading in a metal strip slitter line.

### Description of the Reference Symbols

- 1: Negative-pressure sheet structure
- 2: Strip
- 3: Tabular negative-pressure sheet
- 4: Baseplate
- 5: Sheet with conduction grooves
- 6: Nonwoven cloth lamination outer layer
- 7: Surface layer member
- 8: Negative-pressure conduction groove
- 9: Negative-pressure conduction hole
- 10: Negative-pressure common path
- 11: Tabular negative-pressure sheet
- 12: Negative-pressure common path
- 13: Partition
- 14: Tabular negative-pressure sheet
- 15: Sheet with conduction grooves
- 16: Negative-pressure conduction groove
- 17: Negative-pressure conduction hole
- 18: Negative-pressure common path
- 19: Tabular negative-pressure sheet
- 20: Negative-pressure common path
- 21: Partition
- 22: Negative-pressure regulating valve
- 23: Region (with strip)
- 24: Region (without strip)
- 25: Tabular negative-pressure sheet
- 26: Sheet with conduction grooves
- 27: Intermediate layer
- 28: Negative-pressure groove
- 29: Negative-pressure hole
- 30: Negative-pressure common path
- 31: Numerous vent holes
- 32: Round blade of slitter
- 33: Negative-pressure sheet structure
- 34: Surface layer member
- 35: Coil
- 36: Curved negative-pressure sheet
- 37: Belt-type tension device
- 38: Curved portion
- 39: Baseplate
- 40: Separator
- 41: Sheet with conduction grooves
- 42: Negative-pressure conduction groove
- 43: Nonwoven cloth
- 44: General nonwoven cloth
- 45: High-density woven cloth
- 46: General woven cloth

## Claims

1. A negative-pressure sheet structure (3) for applying a gripping force on a strip and adapted to be provided on a metal slitter line, **characterized in that** the negative-pressure sheet structure (3) is a tabular negative-pressure sheet, said negative-pressure sheet structure (3) comprising:
a main body comprising a baseplate (4) and a sheet (5) disposed at an outer side of the baseplate (4);
conduction holes (9) which are provided inside the sheet (5) and in which a negative pressure is generated, in use, by a predetermined suction device;
conduction grooves (8) formed on a surface of the sheet (5) and connected to the conduction holes (9); and
an outer layer portion (6) provided at an outer side of the sheet (5) and of the conduction grooves (8) and having air permeability of 1.0 cm³/cm²/s or less in terms of Frazier air permeability.

2. The negative-pressure sheet structure (3; 36) according to Claim 1, wherein
a plurality of negative-pressure inlets connected to the conduction holes (9) are formed, and suctioning is controllable for each of the negative-pressure inlets.

3. The negative-pressure sheet structure (3; 36) according to Claim 1 or 2, comprising:
an intermediate layer portion (27) that is provided between the conduction grooves (8) and the outer layer portion (6) and has a plurality of vent holes formed therein.

4. The negative-pressure sheet structure (3; 36) according to Claim 1, 2 or 3, wherein
the outer layer portion (6) consists of a nonwoven cloth (43) with low air permeability provided at the outer side of the conduction grooves (8), and an outer layer member which is laminated on the outer side of the nonwoven cloth and has a larger frictional coefficient than the nonwoven cloth and in which numerous fine throughholes are formed.

5. The negative-pressure sheet structure (3; 36) according to Claim 1, 2, 3 or 4, wherein
a volume of air flowing in the conduction holes (9) is adjustable.

## Patentansprüche

1. Unterdruck-Flachmaterialstruktur (3) zum Anlegen einer Greifkraft an einen Streifen, die dafür ausgelegt ist, in einer Metall-Langschneidelinie angeordnet zu werden, **dadurch gekennzeichnet, dass** die Unterdruck-Flachmaterialstruktur (3) ein tafelförmiges Unterdruck-Flachmaterial ist, wobei die Unterdruck-Flachmaterialstruktur (3) umfasst:
einen Hauptkörper, der eine Grundplatte (4) und eine Lage (5) umfasst, die an einer Außenseite der Grundplatte (4) angeordnet ist;
Leitungslöcher (9), die im Inneren der Lage (5) ausgebildet sind und in denen während des Gebrauchs durch eine zuvor festgelegte Saugvorrichtung ein Unterdruck erzeugt wird;
Leitungsnuten (8), die auf einer Oberfläche der Lage (5) ausgebildet und mit den Leitungslöchern (9) verbunden sind;
und
einen äußeren Schichtabschnitt (6), der an einer Außenseite des Lage (5) und der Leitungsnuten (8) ausgebildet ist und eine Luftdurchlässigkeit von 1,0 cm³/cm²/s oder weniger in Bezug auf die Frazier-Luftdurchlässigkeit aufweist.

2. Unterdruck-Flachmaterialstruktur (3; 36) nach Anspruch 1, wobei
mehrere Unterdruckeinlässe, die mit den Leitungslöchern (9) verbunden sind, ausgebildet sind und das Saugen für jeden der Unterdruckeinlässe gesteuert werden kann.

3. Unterdruck-Flachmaterialstruktur (3; 36) nach Anspruch 1 oder 2, umfassend:
einen Zwischenschichtabschnitt (27), der zwischen den Leitungsnuten (8) und dem äußeren Schichtabschnitt (6) angeordnet ist und in dem mehrere Entlüftungslöcher ausgebildet sind.

4. Unterdruck-Flachmaterialstruktur (3; 36) nach Anspruch 1, 2 oder 3, wobei
der äußere Schichtabschnitt (6) aus einem Vliesstoff (43) mit geringer Luftdurchlässigkeit, der an der Außenseite der Leitungsnuten (8) angeordnet ist, und einem äußeren Schichtelement, das an die Außenseite des Vliesstoffs laminiert ist und einen größeren Reibungskoeffizienten als der Vliesstoff besitzt und in dem zahlreiche feine Durchgangslöcher ausgebildet sind, besteht.

5. Unterdruck-Flachmaterialstruktur (3; 36) nach Anspruch 1, 2, 3 oder 4, wobei
ein in den Leitungslöchern (9) strömendes Luftvolumen einstellbar ist.

## Revendications

1. Structure de feuille de pression négative (3) permettant d'appliquer une force de serrage sur un feuillard et conçue pour être placée sur une ligne de refendage de métal, **caractérisée en ce que** la structure de feuille de pression négative (3) est une feuille tabulaire de pression négative, ladite structure de feuille de pression négative (3) comprenant :
un corps principal comprenant une plaque de base (4) et une feuille (5) disposée sur un côté extérieur de la plaque de base (4) ;
des trous de conduction (9) qui sont ménagés à l'intérieur de la feuille (5) et dans lesquels une pression négative est engendrée, en cours d'utilisation, par un dispositif d'aspiration prédéterminé ;
des rainures de conduction (8) formées sur une surface de la feuille (5) et reliées aux trous de conduction (9) ; et
une partie couche extérieure (6) placée sur un côté extérieur de la feuille (5) et des rainures de conduction (8) et possédant une perméabilité à l'air de 1,0 cm³/cm²/s ou moins selon la perméabilité à l'air Frazier.

2. Structure de feuille de pression négative (3 ; 36) selon la revendication 1, dans laquelle :
une pluralité d'entrées de pression négative reliées aux trous de conduction (9) est formée, et l'aspiration peut être commandée pour chacune des entrées de pression négative.

3. Structure de feuille de pression négative (3 ; 36) selon la revendication 1 ou 2, comprenant :
une partie couche intermédiaire (27) qui est placée entre les rainures de conduction (8) et la partie couche extérieure (6) et dans laquelle est formée une pluralité d'évents.

4. Structure de feuille de pression négative (3 ; 36) selon la revendication 1, 2 ou 3, dans laquelle :
la partie couche extérieure (6) est constituée d'un tissu non tissé (43) à faible perméabilité à l'air, placé sur le côté extérieur des rainures de conduction (8), et d'un élément de couche extérieure qui est stratifié sur le côté extérieur du tissu non tissé et qui possède un coefficient de frottement supérieur à celui du tissu non tissé et dans lequel sont formés de nombreux fins trous traversants.

5. Structure de feuille de pression négative (3 ; 36) selon la revendication 1, 2, 3 ou 4, dans laquelle :
un volume d'air circulant dans les trous de conduction (9) est réglable.
